# EUROPÄISCHE PATENTSCHRIFT

(11) **EP 0 720 959 B1**
(45) Veröffentlichungstag und Bekanntmachung des Hinweises auf die Patenterteilung: **20.05.1998**
(21) Anmeldenummer: 95116768.3
(22) Anmeldetag: 25.10.1995
(51) Int. Cl.: B65H 29/00

(54) **Vorrichtung zum Fördern von Gegenständen, insbesondere von flächigen, biegsamen Erzeugnissen**
Device for transporting objects, in particular flat, flexible products
Dispositif pour transporter des objets, notamment des produits plats et flexibles

(30) Priorität: 03.01.1995 CH 9/95
(43) Veröffentlichungstag der Anmeldung: 10.07.1996
(73) Patentinhaber: Ferag AG, 8340 Hinwil (CH)
(72) Erfinder: Honegger, Werner, CH-8806 Bäch (CH)
(74) Vertreter: Patentanwälte Schaad, Balass, Menzl & Partner AG

(56) Entgegenhaltungen:
- EP-A- 0 229 888
- EP-A- 0 387 726

## Beschreibung

Die vorliegende Erfindung betrifft eine Vorrichtung zum Fördern von Gegenständen, insbesondere von flächigen, biegsamen Erzeugnissen, gemäss dem Oberbegriff des Anspruches 1.

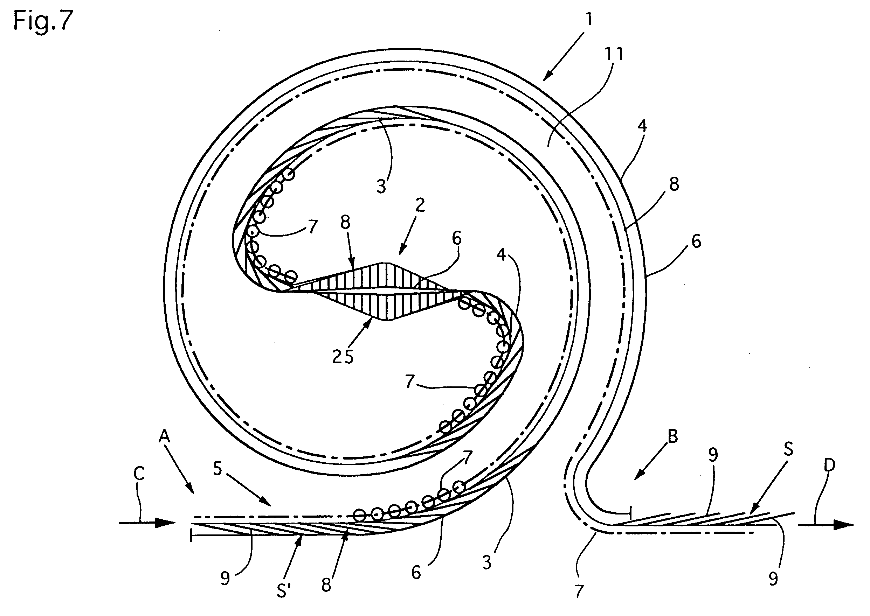

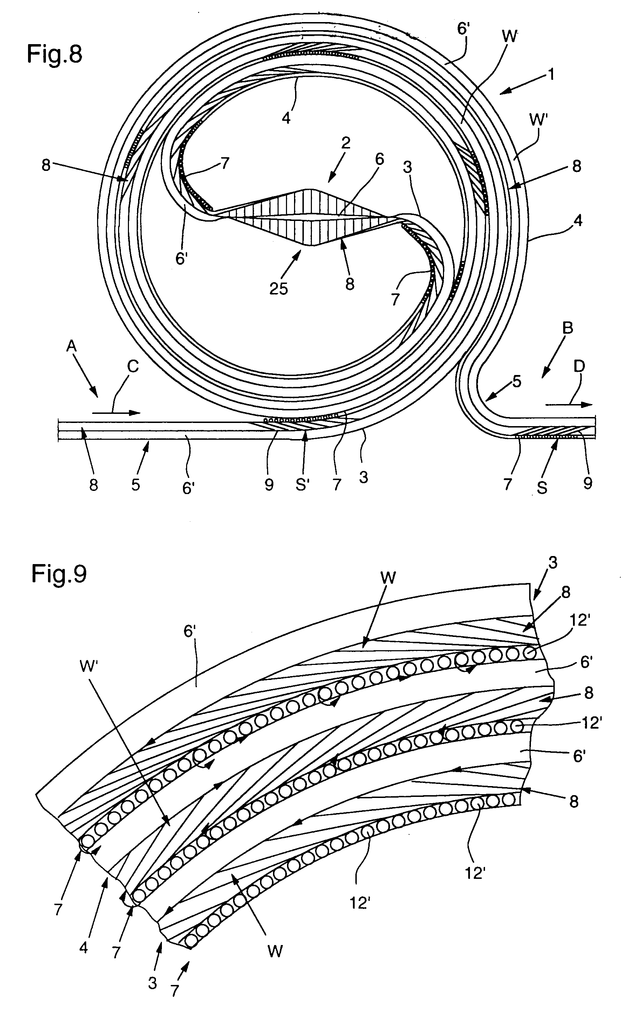

Aus der DE-C-36 21 834 ist eine Fördervorrichtung dieser Art bekannt, die zum vorübergehenden Speichern von gefalteten Druckereiprodukten bestimmt ist und bei der die Förderstrecken entweder in Schlaufen oder wendelförmig verlaufen (Figuren 7 und 8). Abgesehen davon, dass durch diese Anordnung der Förderstrecken viele Produkte auf engem Raum untergebracht werden können, lassen sich entlang dieser Förderstrecken die, die Druckereiprodukte fördernden, Transportmittel zusammenschieben, wodurch die Speicherkapazität erhöht wird. Hiezu müssen die Transportmittel entsprechend ausgebildet sein.Zudem sind zusätzliche Einrichtungen nötig, um die Fördermittel zusammenzuschieben und wieder auseinanderzuziehen.

Der vorliegenden Erfindung liegt nun die Aufgabe zugrunde, eine Fördervorrichtung der eingangs genannten Art zu schaffen, die es auf konstruktiv einfache Weise erlaubt, bei möglichst geringem Raumbedarf die Förderstrecke möglichst lang auszubilden, damit sich im gegebenen Raum möglichst viele Gegenstände gleichzeitig aufhalten können.

Diese Aufgabe wird erfindungsgemäss durch die Merkmale des kennzeichnenden Teils des Anspruches 1 gelöst.

Das Führen der Förderstrecke entlang einer Bahn, die in der Art einer Spirale ausgebildet ist, erlaubt es, bei geringstem Platzbedarf die Förderstrecke möglichst lang auszubilden. Dieser Vorteil macht sich besonders dann bemerkbar, wenn zwei in der Art einer Spirale verlaufende, zueinander konzentrische Förderstrecken mit entgegengesetzter Förderrichtung vorgesehen sind, die im Zentrum aneinander anschliessen und deren Windungen jeweils zwischen den Windungen der anderen Förderstrecke verlaufen.

Im Folgenden werden anhand der Zeichnung Ausführungsbeispiele des Erfindungsgegenstandes näher erläutert. Es zeigen rein schematisch:
- Figur 1: in Seitenansicht den prinzipiellen Aufbau einer erfindungsgemässen Fördereinrichtung,
- Figur 2: ebenfalls in Seitenansicht und mit mehr Einzelheiten die Fördereinrichtung gemäss Figur 1,
- Figur 3: einen Schnitt entlang der Linie III - III in Figur 2,
- Figur 4: eine Seitenansicht der Figur 3,
- Figur 5: in einer der Figur 3 entsprechenden Darstellung eine andere Ausführungsform der Förderanordnung der Forderstrecken,
- Figur 6: in Seitenansicht eine verfahrbare Fördereinrichtung gemäss Figur 1,
- Figuren 7 & 8: Varianten der in den Figuren 1 - 3 gezeigten Fördereinrichtung,
- Figur 9: einen Ausschnitt aus der Figur 8 in gegenüber letzterer vergrössertem Massstab,
- Figuren 10 - 15: in einer der Figur 1 entsprechenden Darstellung weitere Varianten der Fördereinrichtung gemäss Figur 1,
- Figuren 16 - 18: verschiedene Einsatzmöglichkeiten der Fördereinrichtung gemäss Figur 1,
- Figur 19: eine der Fördereinrichtung gemäss Figur 1 entsprechende Fördereinrichtung mit doppelten Förderstrecken,
- Figuren 20 & 21: eine erste und
- Figuren 22 & 23: eine zweite Ausführungsform einer Fördervorrichtung mit nur einer spiralförmigen Förderstrecke,
- Figur 24: in Seitenansicht eine weitere Variante der in Figur 1 gezeigten Fördereinrichtung, und
- Figuren 25 & 26: zwei Varianten einer erfindungsgemässen Fördereinrichtung mit einem etwas anderen Verlauf der Förderstrecken.

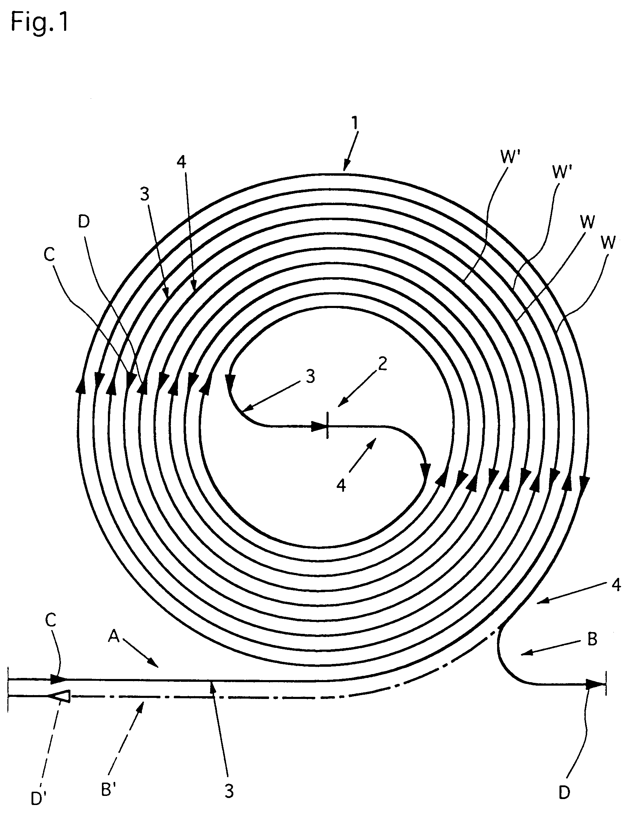

In Figur 1 ist in vereinfachter Darstellung eine erfindungsgemässe Fördereinrichtung 1 gezeigt, die durch zwei spiralförmig um ein Zentrum 2 verlaufende, nur schematisch dargestellte Förderstrecken 3, 4 gebildet ist. Die erste Förderstrecke 3 verläuft von einem Eingang A, der bezüglich des Zentrums 2 aussen liegt, in der Form einer Spirale nach einwärts gegen das Zentrum 2. Die Förderrichtung dieser ersten Förderstrecke 3 ist mit C bezeichnet. Die zweite Förderstrecke 4 schliesst in diesem Zentrum 2 an die erste Förderstrecke 3 an und verläuft von diesem Zentrum 2 nach auswärts zu einem Ausgang B, der bezüglich des Zentrums 2 ebenfalls aussen liegt. Die Förderrichtung D der zweiten Förderstrecke 4 ist der Förderrichtung C der ersten Förderstrecke 3 entgegengesetzt. Doch erfolgt eine Förderung der Gegenstände immer im selben Fördersinn, d.h. es findet keine Umkehrung des Fördersinns statt. Die beiden Förderstrecken 3, 4 sind ineinandergeschachtelt. Das heisst, die Windungen W der einen Förderstrecke 3 verlaufen jeweils zwischen den Windungen W' der anderen Förderstrecke 4 und umgekehrt.

Wie die Figur 1 zeigt können der Eingang A und der Ausgang B auf sich gegenüberliegenden Seiten angeordnet werden oder aber auch auf derselben Seite liegen, wie das strichpunktiert dargestellt ist (Ausgang B').

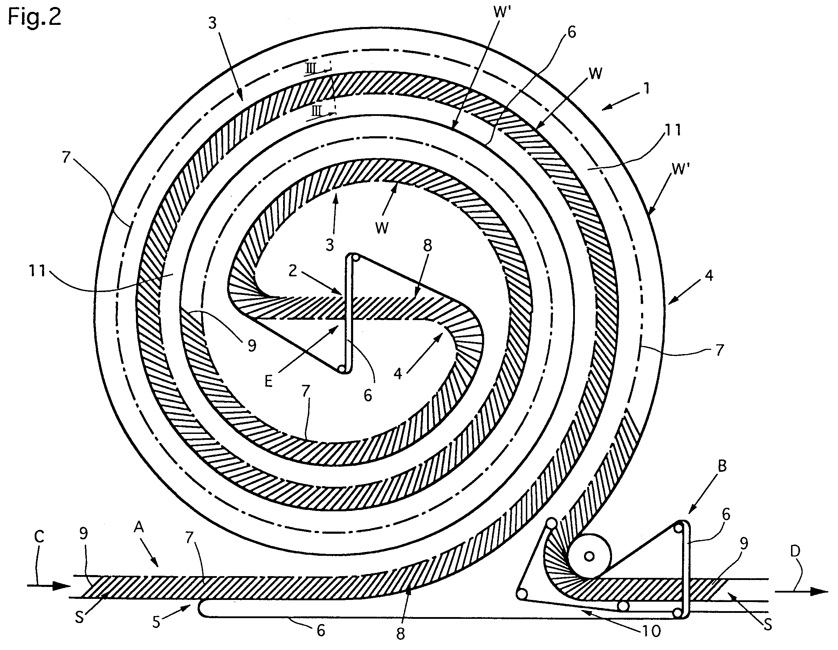

In Figur 2 ist die Fördereinrichtung gemäss Figur 1 etwas ausführlicher dargestellt.

Aus dieser Figur 2 ist es ersichtlich, dass zur Förderung der Gegenstände durch die Förderstrecken 3, 4 hindurch eine mit 5 bezeichnete Förderanordnung vorgesehen ist, die entlang beider Förderstrecken 3, 4 wirksam ist. Diese Förderanordnung 5 besteht aus einem auf nicht näher dargestellte Weise umlaufend angetriebenen, endlosen Förderriemen 6 sowie einer nur schematisch dargestellten Rollenbahn 7, die bezüglich des Förderriemens 6 innen liegt und die ortsfest angeordnet ist. Das durch die Förderstrecken 3, 4 hindurchzuführende Fördergut 8 wird zwischen dem Förderriemen 6 und der Rollenbahn 7 aufgenommen und gegen das Zentrum 2 hin durch die Rollenbahn abgestützt. Im Zentrum 2 wird der Förderriemen 6 an der mit E bezeichneten Stelle gekehrt, damit er auch entlang der zweiten Förderstrecke 4 auf der aussenliegenden Seite des Fördergutes 8 liegt. Im in der Figur 2 dargestellten Fall wird das Fördergut 8 durch Druckereierzeugnisse 9, insbesondere Zeitungen, Zeitschriften und Teile davon sowie Beilagen hiezu gebildet. Diese Druckereierzeugnisse 9 werden in Schuppenformation S zugeführt. Nach dem Durchlaufen der Förderstrecken 3 und 4 verlassen die Druckereierzeugnisse 9 am Ausgang B die Fördereinrichtung 1 wieder in derselben Schuppenformation S. Dies bedeutet, dass sich die gegenseitige Lage der Druckereierzeugnisse 9 innerhalb der Schuppenformation S beim Durchlaufen der Förderstrecken 3, 4 nicht verändert.

Die die Fördereinrichtung 1 am Ausgang B verlassenden Druckereierzeugnisse 9 werden mittels eines nur schematisch dargestellten Wegförderers 10 weggefördert.

Aus der Figur 2 ist ersichtlich, dass zwischen den Windungen W und W', d.h. zwischen dem Förderriemen 6 und der ortsfesten Rollenbahn 7 der jeweils aussenliegenden Windung W, W' ein Zwischenraum 11 vorhanden ist, dessen Grösse von der Dicke des Fördergutstromes, d.h. von der Dicke der Schuppenformation S, abhängig ist.

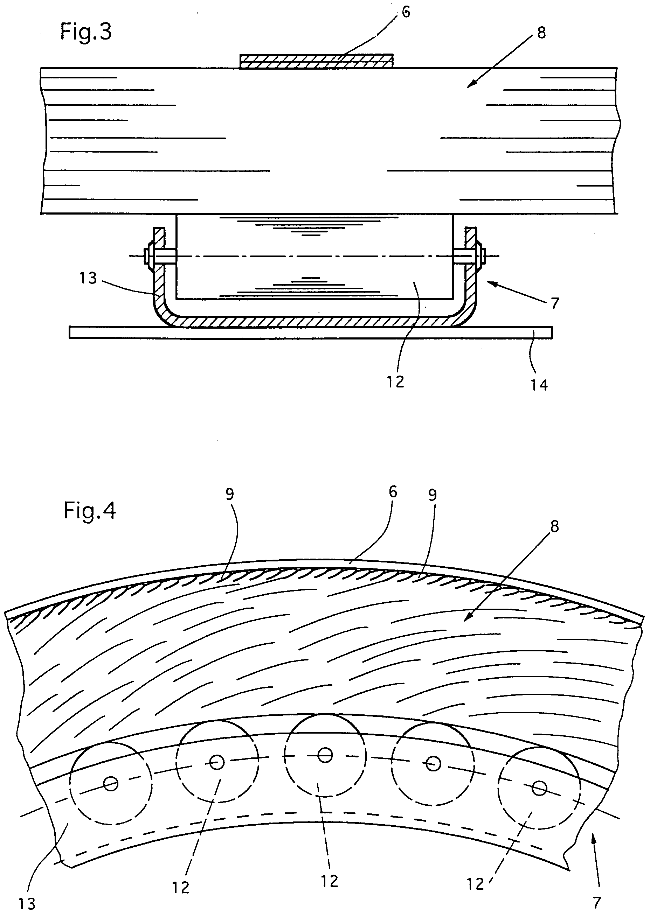

Aus den Figuren 3 und 4 ist der genauere Aufbau der Förderanordnung 5 ersichtlich. Der Förderriemen 6 kann z.B. ein Flach- oder Rundriemen oder aber auch ein Zahnriemen sein. Die Rollenbahn 7 besteht aus einer Vielzahl von Rollen oder Walzen 12, die frei drehbar in einer Halterung 13 gelagert sind. Die Halterung 13 ist an einer ortsfesten Abstützung 14 befestigt. Die Rollen oder Walzen 12 stützen das Fördergut 8 gegen das Zentrum 2 hin ab und werden vom Fördergut 8 drehend angetrieben. Die Förderung des Fördergutes 8 erfolgt durch den angetriebenen Förderriemen 6.

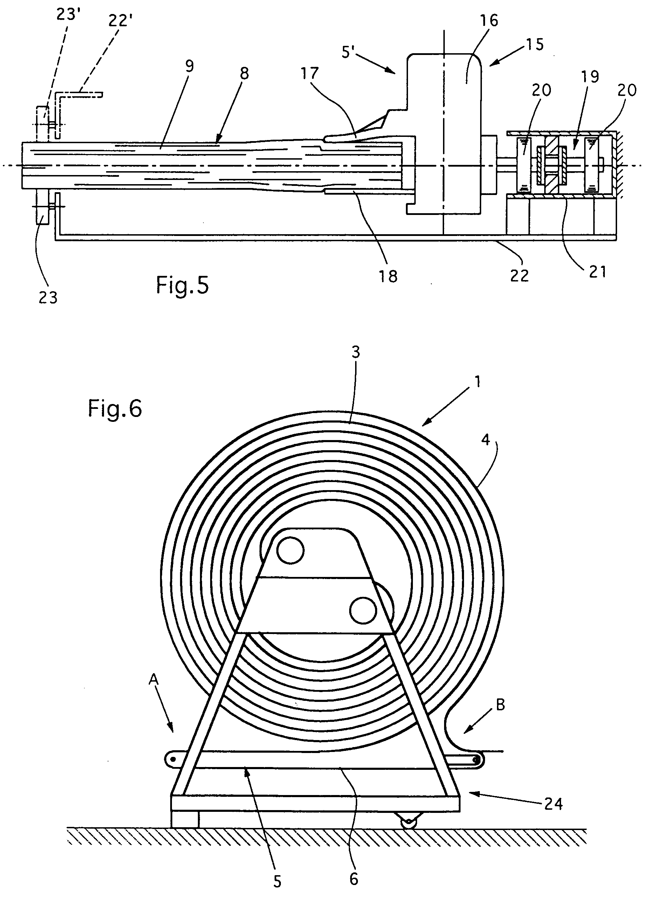

In Figur 5 ist eine andere Ausführungsform der Förderanordnung gezeigt, die mit 5' bezeichnet ist. Letztere weist zum Fördern des Fördergutes 8 entlang der Förderstrecken 3, 4 einen Greifertransporteur 15 auf, der von bekannter Bauart ist. Dieser Greifertransporteur 15 hat Greifer 16, die eine feststehende Greiferbacke 17 sowie eine bewegliche Greiferbacke 18 aufweisen. Letztere ist in der in Figur 5 gezeigten Klemmstellung verriegelt und wird zum Freigeben des Fördergutes 8 gelöst. Die Greifer 16 sind in Förderrichtung hintereinander an einer Gliederkette 19 befestigt, die mittels Laufrädern 20 in einem Kanal 21 geführt ist. Der Kanal 21 ist an einer ortsfesten Abstützung 22 befestigt.

Auf der den Greifern 16 gegenüberliegenden Seite wird das flexible Fördergut 8 durch Stützrollen 23 abgestützt, die an der Abstützung 22 drehbar gelagert sind. Befindet sich das Fördergut 8 im Bereich oberhalb der horizontalen Mittelebene durch das Zentrum 2 der Fördereinrichtung 1 so greifen die Stützrollen an der andern Seite des Fördergutstromes an, wie das in Figur 5 strichpunktiert durch die Rolle 23' und die Abstützung 22' angedeutet ist.

In Figur 6 ist eine Ausführungsform gezeigt, bei der die Fördereinrichtung 1 nicht ortsfest angeordnet ist, sondern in einem verfahrbaren Gestell oder Rahmen 24 gelagert ist. Die Fördereinrichtung 1 kann mittels des Gestelles 24 an den jeweiligen Einsatzort gebracht und mit dem Eingang A an einen Zuförderer und mit dem Ausgang B an einen Wegförderer angeschlossen werden. Die Antriebseinheit für die Förderanordnung 5 für die beiden Förderstrecken 3 und 4 kann entweder im Rahmen 24 gelagert oder ortsfest an den verschiedenen Einsatzorten (Auf- bzw. Abwickelstation) vorgesehen sein. Im letztgenannten Fall muss die Förderanordnung 5 dann jeweils an die ortsfeste Antriebseinheit angekoppelt werden.

Die Ausführungsform gemäss Figur 7 unterscheidet sich von der anhand der Figuren 1 - 4 beschriebenen Ausführungsform dadurch, dass im Zentrum 2 im Uebergangsbereich von der ersten Förderstrecke 3 zur zweiten Förderstrecke 4 eine Wendestrecke 25 vorgesehen ist, entlang der der Fördergutstrom 8 um seine Längsachse um 180° gewendet wird. Durch dieses Wenden des Fördergutstromes 8, d.h. der einlaufenden Schuppenformation S', während des Durchlaufens der Wendestrecke 25 wird erreicht, dass in der ausgehenden Schuppenformation S die Druckereierzeugnisse 9 eine andere Lage einnehmen als in der ankommenden Schuppenformation S'. Beim gezeigten Ausführungsbeispiel liegt im einlaufenden Schuppenstrom S' jedes Druckereierzeugnis jeweils auf dem nachfolgenden Druckereierzeugnis auf. Dies bedeutet, dass im die Fördereinrichtung 1 am Ausgang B verlassenden Schuppenstrom S jedes Druckereierzeugnis 9 auf dem vorauslaufenden Druckereierzeugnis aufliegt.

Zu erwähnen ist noch, dass bei der in Figur 7 gezeigten Fördereinrichtung 1 die Förderanordnung 5 gleich ausgebildet ist wie bei der Ausführungsform gemäss den Figuren 1 bis 4, d.h. einen angetriebenen endlosen Förderriemen 6 sowie eine Rollenbahn 7 aufweist. Diese Ausführungsform bringt den Vorteil, dass der Förderriemen 6 nicht wie anhand der Fig. 2 gezeigt im Zentrum 2 (Wendestelle E) auf die andere Seite des Fördergutstromes gebracht wird.

Die in Figur 8 gezeigte Fördereinrichtung 1 entspricht der Fördereinrichtung gemäss Figur 7 mit der Ausnahme einer anderen Ausgestaltung der Förderanordnung 5. Letztere weist bei der Fördereinrichtung 1 gemäss Figur 8 auf der dem Zentrum 2 zugekehrten Seite noch immer eine Rollenbahn 7 auf. Anstelle eines Förderriemens mit im wesentlichen gegebener Dicke wird bei dieser Ausführungsform ein ebenfalls angetriebenes, endloses Band 6' verwendet, das aus einem elastisch komprimierbaren Material besteht. Dieses Band 6' wird je nach Dicke des Fördergutes 8, d.h. je nach Dicke des Schuppenstromes S, S' mehr oder weniger zusammengedrückt. Dadurch ist es möglich, das Band 6' in Anlage an den Rollen 12' der Rollenbahn 7 zu führen, so dass der bei den anderen Ausführungsformen vorhande Zwischenraum 11 entfällt, wie das insbesondere aus Figur 9 ohne weiteres ersichtlich ist. Dadurch ist eine noch kompaktere Bauweise möglich. Zudem werden die Rollen oder Walzen 12' nicht nur durch das geförderte Fördergut 8 angetrieben, sondern direkt auch durch das anliegende Band 6', wie das in Figur 9 durch Pfeile angedeutet ist.

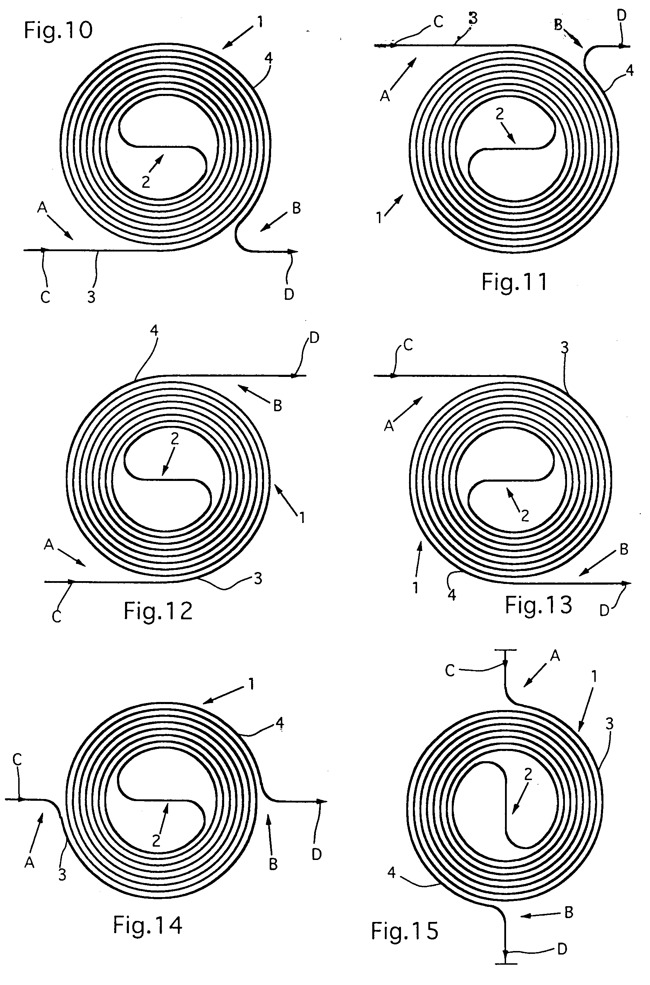

In den Figuren 10 - 15 werden in einer der Figur 1 entsprechenden Darstellung verschiedene Möglichkeiten zur Anordnung der Ein- und Ausgänge der Fördereinrichtung 1 rein schematisch gezeigt. So können der Eingang A und der Ausgang B entweder beide unterhalb (Figur 10) oder oberhalb (Figur 11) der Fördereinrichtung 1 angeordnet werden. Wie die Figuren 12 und 13 zeigen, kann der Eingang A unterhalb und der Ausgang B oberhalb der Fördereinrichtung 1 oder umgekehrt angeordnet sein. Bei den in den Figuren 14 und 15 gezeigten Ausführungsbeispielen liegen der Eingang A und der Ausgang B links bzw. rechts des Zentrums 2 oder oberhalb bzw. unterhalb dieses Zentrums 2.

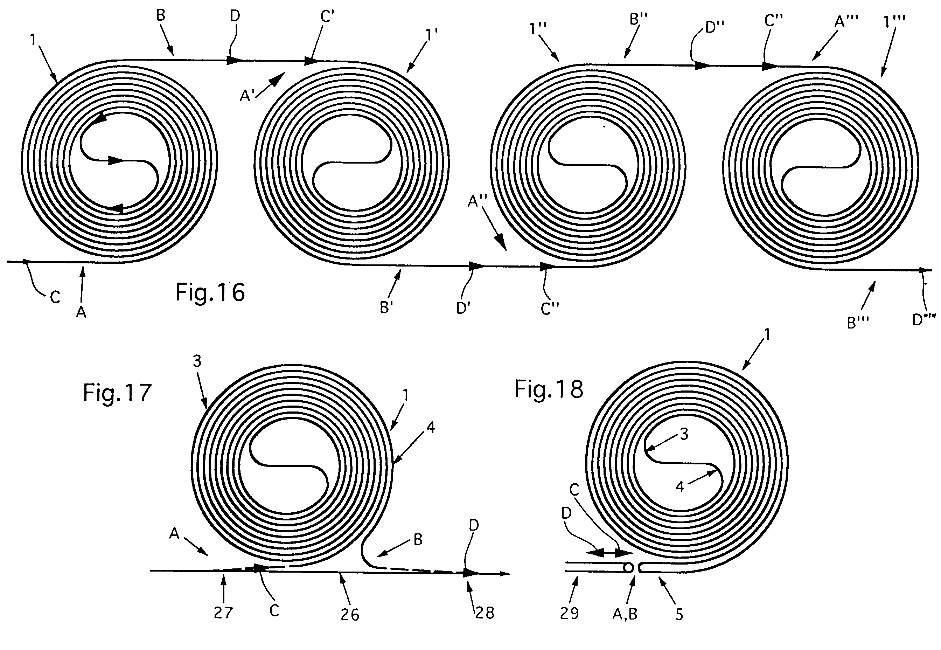

Bei der Ausführungsform gemäss Figur 16 sind 4 Fördereinrichtungen 1, 1', 1'' und 1''' hintereinander geschaltet. Die am Eingang A in die Fördereinrichtung 1 einlaufenden Gegenstände durchlaufen nacheinander die Fördereinrichtungen 1, 1', 1'' und 1''' und verlassen die Fördereinrichtung 1''' am Ausgang B'''.

Die Figuren 17 und 18 zeigen zwei andere Einsatzmöglichkeiten der Fördereinrichtung 1.

In Figur 17 ist die Fördereinrichtung 1 einer Hauptförderlinie 26 parallel geschaltet. Falls die entlang dieser Hauptförderlinie 26 auf die Fördereinrichtung 1 zulaufenden Erzeugnisse diese Fördereinrichtung 1 durchlaufen sollen, werden der Eingang A und der Ausgang B der Fördereinrichtung 1 über nur schematisch angedeutete Weichen 27 und 28 an die Hauptförderlinie 26 angeschaltet. Daneben besteht auch die Möglichkeit, den Eingang A der Fördereinrichtung 1 nur solange an die Hauptförderlinie 26 anzuschalten, bis die Förderstrecken 3 und 4 ganz oder teilweise mit Erzeugnissen gefüllt sind und dann die Zufuhr von Erzeugnissen zu den Förderstrecken stillzusetzen. Zu einem späteren Zeitpunkt werden dann durch Einschalten der Förderanordnung 5 die sich in den Förderstrecken 3 und 4 befindlichen Erzeugnisse über den Ausgang B wieder an die Hauptförderlinie 26 abgegeben. Die Fördereinrichtung 1 kann somit entweder für den Durchlauf- oder den Speicherbetrieb eingesetzt werden.

Demgegenüber ist bei der Ausführungsform gemäss Figur 18 die Fördereinrichtung 1 nur für den Speicher- oder Pufferbetrieb ausgelegt. Der Eingang A und der Ausgang B der Fördereinrichtung 1 liegen am selben Ort. Mittels eines Bandförderers 29 werden die zu speichernden Erzeugnisse in Richtung des Pfeiles C zugeführt und durchlaufen - angetrieben durch die Förderanordnung 5 - auf die beschriebene Weise die Förderstrecken 3 und 4. Zum Entleeren der Förderstrecken 3 und 4 wird die Förderrichtung der Förderanordnung 5 wie auch diejenige des Bandförderers 29 umgekehrt, und die sich in den Förderstrecken 3 und 4 befindlichen Erzeugnisse werden in Richtung des Pfeiles D aus der Fördereinrichtung 1 herausgefördert und weggeführt.

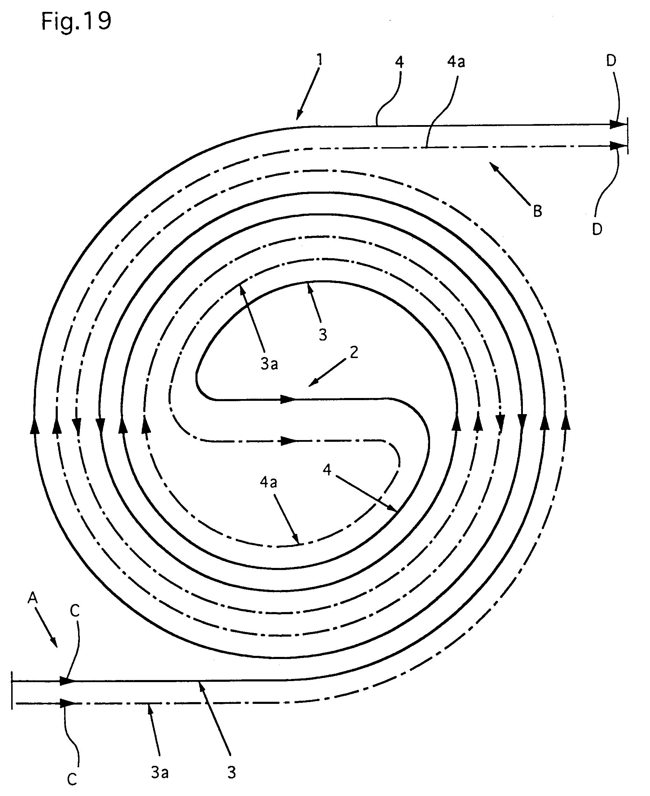

In Figur 19 ist eine Fördereinrichtung 1 gezeigt, die je zwei parallel zueinander geführte Förderstrecken 3 und 3a sowie 4 und 4a aufweist. Die aneinander anschliessenden Förderstrecken 3 und 4 sowie 3a und 4a haben voneinander unabhängige Förderanordnungen, so dass sie synchron oder aber auch unabhängig voneinander betrieben werden können.

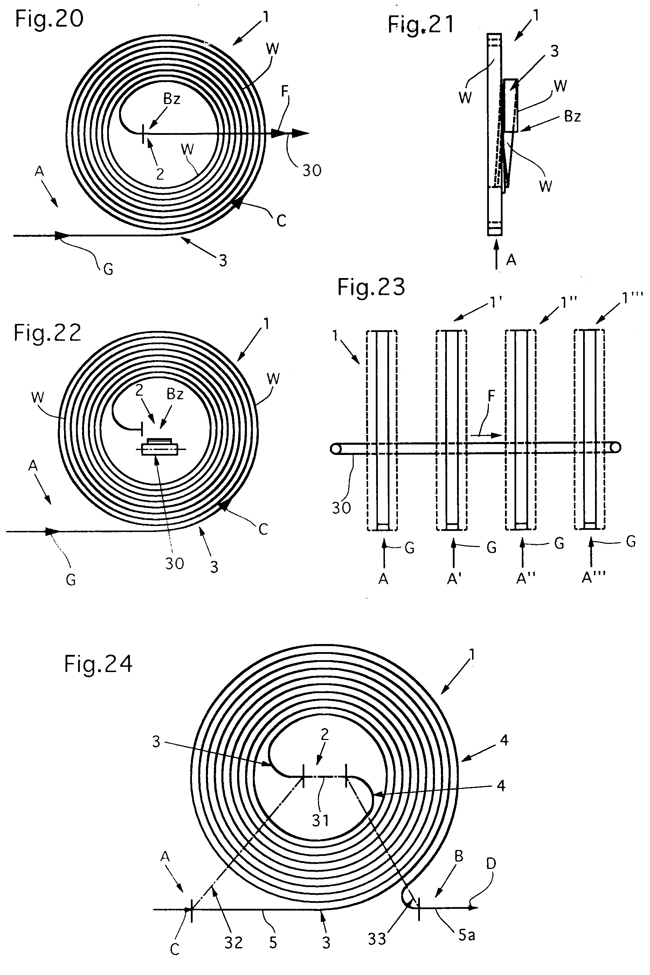

Die in den Figuren 20 - 23 dargestellten Ausführungsbeispiele unterscheiden sich von den Ausführungsformen gemäss den Figuren 1 - 19 dadurch, dass die Fördereinrichtung 1 nur eine spiralförmig um das Zentrum 2 herum verlaufende Förderstrecke 3 aufweist, deren Eingang mit A bezeichnet ist und deren Ausgang B_{z} auch den Ausgang der Fördereinrichtung 1 bildet. Bei den gezeigten Ausführungsbeispielen liegt dieser Ausgang B_{z} im Zentrum 2, während der Eingang A gegenüber diesem Zentrum 2 gegen aussen versetzt ist. Es ist aber auch denkbar, den Eingang A der Fördereinrichtung 1 in diesem Zentrum 2 vorzusehen, wobei dann der Ausgang B_{z} aussen liegt.

Bei der Ausführungform gemäss Figur 20 sind die Windungen W der Förderstrecke 3 gegeneinander etwas seitlich versetzt, wie das aus Figur 21 ersichtlich ist. Das hat zur Folge, dass der Ausgang B_{z} seitlich frei zugänglich ist, obwohl er im Zentrum 2 der durch die Förderstrecke 3 gebildeten Spirale liegt. Dies ermöglicht es, die die Fördereinrichtung 1 am Ausgang B_{z} verlassenden Erzeugnisse in einer Richtung wegzuführen, die im wesentlichen parallel zur Zuführrichtung G der der Fördereinrichtung 1 zugeführten Erzeugnisse verläuft. Dies ist aus Figur 20 ersichtlich, in der mit 30 ein Wegförderer bezeichnet ist, dessen Förderrichtung F im wesentlichen parallel zur Zuführrichtung G ist.

Bei der Ausführungsform gemäss Figur 22 sind die Windungen der Förderstrecke 3 nicht seitlich gegeneinander versetzt. Der Ausgang B_{z} der Fördereinrichtung 1 ist somit auf die Windungen W ausgerichtet. Das Wegführen der die Förderstrecke 3 verlassenden Erzeugnisse aus dem Zentrum 2 kann daher nur mittels eines Wegförderers 30 erfolgen, dessen Förderrichtung F quer, vorzugsweise etwa rechtwinklig, zur Zuführrichtung G verläuft. Aus Figur 22 ist ersichtlich, dass die die Fördereinrichtung 1 am Ausgang B_{z} verlassenden Erzeugnisse auf den vorzugsweise als Bandförderer ausgebildeten Wegförderer 30 abgelegt werden.

Bei dieser Anordnung ist es möglich, mehreren Fördereinrichtungen 1, 1', 1'' und 1''' einen einzigen Wegförderer 30 zuzuordnen, wie das in Figur 23 gezeigt ist. Diese Ausführungsform erlaubt es, durch gesteuertes Entladen der einzelnen Förderanordnungen 1, 1', 1'' und 1''', d.h. durch entsprechendes, aufeinander abgestimmtes Ein- und Ausschalten der Förderanordnungen der einzelnen Fördereinrichtungen 1, 1', 1'' und 1''', auf dem Wegförderer 30 verschiedene Erzeugnisse, die aus den verschiedenen Fördereinrichtungen 1, 1', 1'' und 1''' stammen, zusammenzutragen.

Bei den Ausführungsformen gemäss den Figuren 1 - 19 ist eine einzige Förderanordnung 5 vorgesehen, um die Erzeugnisse durch beide Förderstrecken 3 und 4 hindurchzufördern. Bei der Ausführungsform gemäss Figur 24 sind nun zwei voneinander getrennte Förderanordnungen vorgesehen, nämlich eine Förderanordnung 5 für die Förderstrecke 3 sowie eine Förderanordnung 5a für die Förderstrecke 4. Zwischen den beiden Förderstrecken 3 und 4 ist in diesem Falle eine Ueberführungsstrecke 31 angeordnet. Die Antriebe für die getrennte Förderanordnungen 5 und 5a sind nur schematisch angedeutet und mit 32 bzw. 33 bezeichnet.

Diese Ausführungsform ermöglicht es, die Förderstrecken 3 und 4 unabhängig voneinander zu betreiben.

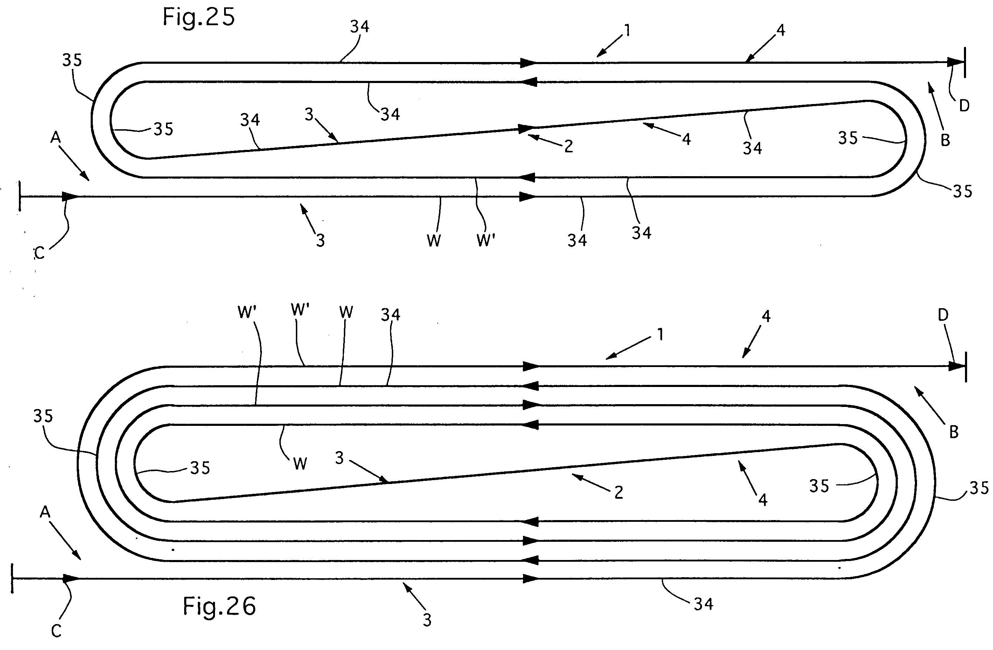

Bei den in den Figuren 25 und 26 gezeigten Varianten weisen die Förderstrecken 3 und 4 nicht wie in den bisher beschriebenen Ausführungsformen eine stetige Krümmung auf, sondern bestehen aus geraden Abschnitten 34 und gekrümmten Abschnitten 35, über die die geraden Abschnitte 34 miteinander verbunden sind. Doch verlaufen auch hier die Förderstrecken 3 und 4 in der Art einer Spirale um ein Zentrum 2 herum. Die Windungen W der einen Förderstrecke 3 liegen ebenfalls zwischen Windung W' der anderen Förderstrecke 4 und umgekehrt, wie das bei den vorangehend beschriebenen Ausführungsformen der Fall ist.

Selbstverständlich ist es auch möglich, bei den Ausführungsformen gemäss den Figuren 25 und 26 nur eine Förderstrecke 3 oder 4 vorzusehen, wie das anhand der Figuren 20 und 22 beschrieben worden ist.

Die in den Figuren 25 und 26 gezeigte Linienführung der Förderstrecken 3 und 4 hat gegenüber den vorher beschriebenen Lösungen mit stetig gekrümmten Förderstrecken 3 und 4 den Nachteil, dass das flexible Fördergut 8 beim Durchlaufen durch die Förderstrecken 3 und 4 nicht stetig gekrümmt wird. Dieser Nachteil macht sich besonders bemerkbar bei Druckereierzeugnissen 9.

Die beschriebene Führung der Forderstrecken 3 und 4 in der Art einer Spirale ermöglicht eine Anordnung der Fördereinrichtung 1 auf engstem Raum.

Es versteht sich, dass die Förderanordnungen zum Fördern der Gegenstände durch die Förderstrecken 3 und 4 hindurch auch anders als wie anhand der Figuren 2 - 5 beschrieben ausgebildet werden können. Dies trifft besonders dann zu, wenn das Fördergut 8 nicht wie dargestellt durch Druckereierzeugnisse 9, sondern durch andersartige Gegenstände gebildet wird.

Die Fördereinrichtungen 1 können im Raum an sich beliebig angeordnet werden, d.h. horizontal, vertikal oder in einer Schräglage. Die geeignete räumliche Anordnung der Fördereinrichtung 1 hängt unter anderem von der Art des Fördergutes 8 ab. Sind es wie gezeigt Druckereiprodukte 9, die durch die Förderstrecken 3 und 4 gefördert werden, so eignet sich eine stehende, d.h. vertikale Anordnung am besten. Werden jedoch Gegenstände gefördert, die nicht biegsam sind und die nicht wie gezeigt zwischen einem Förderriemen 6 und einer Rollenbahn 7 eingeklemmt werden können, so eignet sich eine liegende, d.h. waagrechte Anordnung der Fördereinrichtung besser. Im letztgenannten Fall wäre dann die Förderanordnung so auszubilden, dass die zu fördernden Gegenstände aufgelegt und so durch die Förderstrecken gefördert werden können.

Die Fördereinrichtung 1 kann z.B. statt zum Fördern von Druckereierzeugnissen auch zum Fördern von zu trocknenden Gegenständen durch einen Trocknungsraum hindurch verwendet werden.

## Patentansprüche

1. Vorrichtung zum Fördern von Gegenständen (9), insbesondere von flächigen Erzeugnissen, mit einer Fördereinrichtung (1), zu der eine Krümmungen aufweisende Förderstrecke (3 oder 4) und eine Förderanordnung (5) zum Fördern der Gegenstände (9) entlang der Förderstrecke (3 oder 4) gehören, dadurch gekennzeichnet, dass die Förderstrecke (3 oder 4) in der Art einer Spirale um ein Zentrum (2) herum verläuft, wobei der Eingang (A) der Förderstrecke (3 oder 4) in diesem Zentrum (2) liegt oder gegenüber diesem Zentrum (2) gegen aussen versetzt ist.

2. Vorrichtung nach Anspruch 1, dadurch gekennzeichnet, dass die Förderstrecke (3 oder 4) sich aus im wesentlichen geradlinigen Abschnitten (34) und diese miteinander verbindenden gekrümmten Abschnitten (35) zusammensetzt.

3. Vorrichtung nach Anspruch 1, dadurch gekennzeichnet, dass die Förderstrecke (3 oder 4) stetig gekrümmt ist.

4. Vorrichtung nach einem der Ansprüche 1 - 3, gekennzeichnet durch eine zweite, ebenfalls in der Art einer Spirale verlaufende, zur ersten Förderstrecke (3) konzentrische Förderstrecke (4), der eine Förderanordnung (5) zum Fördern der Gegenstände (9) in einer zur Durchlaufrichtung (C) der ersten Förderstrecke (3) entgegengesetzten Durchlaufrichtung (D) zugeordnet ist und die im Zentrum (2) an die erste Förderstrecke (3) anschliesst, wobei sowohl der Eingang (A) wie auch der Ausgang (B) der beiden hintereinandergeschalteten Förderstrecken (3, 4) gegenüber dem Zentrum (2) nach aussen versetzt sind.

5. Vorrichtung nach Anspruch 4, dadurch gekennzeichnet, dass die Windungen (W, W') der einen Förderstrecke(3, 4) jeweils zwischen den Windungen (W', W) der anderen Förderstrecke (4, 3) verlaufen.

6. Vorrichtung nach einem der Ansprüche 1 - 5, dadurch gekennzeichnet, dass die Förderanordnung (5) durch eine ortsfeste, das Fördergut (8) gegen das Zentrum (2) hin abstützende, vorzugsweise durch Rollen (12) oder Walzen gebildete Führungsbahn (7) und einen endlosen, angetriebenen Förderriemen (6) gebildet ist, wobei das Fördergut (8) zwischen der Führungsbahn (7) und dem Förderriemen (6) angeordnet ist.

7. Vorrichtung nach einem der Ansprüche 1 - 5, dadurch gekennzeichnet, dass die Förderanordnung (5') durch einen Transporteur (15) gebildet ist, der in Abständen an einem flexiblen, angetriebenen Zugorgan (19) befestigte, auslösbare Greifer (16) aufweist, die das Fördergut (8) erfassen.

8. Vorrichtung nach einem der Ansprüche 1 - 5, dadurch gekennzeichnet, dass die Förderanordnung (5) durch eine ortsfeste, das Fördergut (8) gegen das Zentrum (2) hin abstützende, vorzugsweise durch Rollen (12') oder Walzen gebildete Führungsbahn (7) und ein endloses, angetriebenes Förderband (6') aus elastisch komprimierbarem Material gebildet ist, wobei das Fördergut (8) zwischen der Führungsbahn (7) und dem Förderband (6') angeordnet ist.

9. Vorrichtung nach einem der Ansprüche 4 - 8, dadurch gekennzeichnet, dass für beide Förderstrecken (3, 4) eine gemeinsame Förderanordnung (5) vorgesehen ist.

10. Vorrichtung nach einem der Ansprüche 4 - 8, dadurch gekennzeichnet, dass jeder Förderstrecke (3, 4) eine eigene Förderanordnung (5, 5a) zugeordnet ist.

11. Vorrichtung nach einem der Ansprüche 4 - 10, dadurch gekennzeichnet, dass im Zentrum (2) zwischen den Förderstrecken (3, 4) eine Wendestrecke (25) zum Wenden des Fördergutes (8) um 180° um eine parallel zur Förderrichtung verlaufende Achse vorgesehen ist.

12. Vorrichtung nach einem der Ansprüche 1 - 11, dadurch gekennzeichnet, dass neben jeder Förderstrecke (3, 4) eine parallel zu dieser verlaufende weitere Förderstrecke (3a, 4a) angeordnet ist.

13. Vorrichtung nach einem der Ansprüche 1 - 3, dadurch gekennzeichnet, dass bei sich im Zentrum (2) befindlichem Ausgang (B_{z}) ein die die Förderstrecke (3 oder 4) verlassenden Gegenstände (9) übernehmender Wegförderer (30) vorgesehen ist, dessen Förderrichtung (F) quer, vorzugsweise rechtwinklig, zur Zuführrichtung (G) der dem Eingang (A) zugeführten Gegenstände (9) verläuft.

14. Vorrichtung nach Anspruch 13, dadurch gekennzeichnet, dass der Wegförderer (30) mehreren nebeneinander angeordneten Fördereinrichtungen (1, 1', 1'', 1''') gemeinsam zugeordnet ist.

15. Vorrichtung nach einem der Ansprüche 1 - 3, dadurch gekennzeichnet, dass bei sich im Zentrum (2) befindlichem Ausgang (B_{z}) die Windungen (W) der Förderstrecke (3, 4) so seitlich gegeneinander versetzt sind, dass der Ausgang (B_{z}) seitlich freiliegt und dass an den Ausgang (B_{z}) ein Wegförderer (30) angeschlossen ist, dessen Förderrichtung (F) im wesentlichen parallel zur Zuführrichtung (G) der dem Eingang (A) zugeführten Gegenstände (9) verläuft.

16. Vorrichtung nach einem der Ansprüche 1 - 15, dadurch gekennzeichnet, dass die Fördereinrichtung (1) in einem verfahrbaren Rahmen oder Gestell (24) gelagert ist.

17. Vorrichtung nach Anspruch 4, dadurch gekennzeichnet, dass die Förderstrecken (3, 4) neben einer die Gegenstände (9) vorzugsweise geradlinig vorbeiführenden Hauptförderstrecke (26) angeordnet sind und der Eingang (A) und der Ausgang (B) der Förderstrecken (3, 4) wahlweise an die Hauptförderstrecke (26) anschaltbar sind, um von der Hauptförderstrecke (26) zugeführte Gegenstände (9) dem Eingang (A) zuzuführen und am Ausgang (B) erscheindende Gegenstände (9) wieder an die Hauptförderstrecke (26) abzugeben.

18. Vorrichtung nach Anspruch 4, dadurch gekennzeichnet, dass die Förderanordnung (5) in entgegengesetzten Richtungen antreibbar ist, um die dem Eingang (A) zugeführten Gegenstände (9) in die Förderstrecken (3, 4) einzuspeichern und anschliessend am mit dem Eingang (A) zusammenfallenden Ausgang (B) wieder abzugeben.

19. Vorrichtung nach einem der Ansprüche 1 - 18 zum Fördern von Druckereierzeugnissen (9), insbesondere von Zeitungen, Zeitschriften, Teilen hievon sowie Beilagen hiezu, die vorzugsweise in einer Schuppenformation (S, S') anfallen.

## Claims

1. Apparatus for conveying articles (9), in particular sheet-like products, having a conveying device (1), which includes a conveying section (3 or 4) which has curvatures and a conveying arrangement (5) for conveying the articles (9) along the conveying section (3 or 4), characterized in that the conveying section (3 or 4) runs in the manner of a spiral around a centre (2), the inlet (A) of the conveying section (3 or 4) being located in said centre (2) or being offset towards the outside with respect to said centre (2).

2. Apparatus according to Claim 1, characterized in that the conveying section (3 or 4) is made up of essentially rectilinear portions (34) and curved portions (35) which connect said rectilinear portions (34) to one another.

3. Apparatus according to Claim 1, characterized in that the conveying section (3 or 4) is constantly curved.

4. Apparatus according to one of Claims 1 - 3, characterized by a second conveying section (4) which likewise runs in the manner of a spiral, is concentric to the first conveying section (3), is assigned a conveying arrangement (5) for conveying the articles (9) in a run-through direction (D) counter to the run-through direction (C) of the first conveying section (3), and adjoins the first conveying section (3) in the centre (2), both the inlet (A) and the outlet (B) of the two conveying sections (3, 4), arranged one behind the other, being offset towards the outside with respect to the centre (2).

5. Apparatus according to Claim 4, characterized in that the windings (W, W') of one conveying section (3, 4) run in each case between the windings (W', W) of the other conveying section (4, 3).

6. Apparatus according to one of Claims 1 - 5, characterized in that the conveying arrangement (5) is formed by a stationary guide path (7) which supports the conveyable articles (8) towards the centre (2) and is formed preferably by rollers (12), and an endless driven conveying belt (6), the conveyable articles (8) being arranged between the guide path (7) and the conveying belt (6).

7. Apparatus according to one of Claims 1 - 5, characterized in that the conveying arrangement (5') is formed by a transporter (15) which exhibits releasable grippers (16) which are fastened at intervals on a flexible, driven drawing member (19) and seize the conveyable articles (8).

8. Apparatus according to one of Claims 1 - 5, characterized in that the conveying arrangement (5) is formed by a stationary guide path (7) which supports the conveyable articles (8) towards the centre (2) and is formed preferably by rollers (12'), and an endless driven conveying band (6') consisting of an elastically compressible material, the conveyable articles (8) being arranged between the guide path (7) and the conveying band (6').

9. Apparatus according to one of Claims 4 - 8, characterized in that a joint conveying arrangement (5) is provided for the two conveying sections (3, 4).

10. Apparatus according to one of Claims 4 - 8, characterized in that each conveying section (3, 4) is assigned its own conveying arrangement (5, 5a).

11. Apparatus according to one of Claims 4 - 10, characterized in that a turning section (25), for turning the conveyable articles (8) through 180° about an axis running parallel to the conveying direction, is provided in the centre (2) between the conveying sections (3, 4).

12. Apparatus according to one of Claims 1 - 11, characterized in that arranged adjacent to each conveying section (3, 4) is a further conveying section (3a, 4a) which runs parallel to said conveying section (3, 4).

13. Apparatus according to one of Claims 1 - 3, characterized in that, when the outlet (B_{z}) is located in the centre (2), provision is made for a removal conveyor (30) which receives the articles (9) leaving the conveying section (3 or 4) and whose conveying direction (F) runs transversely, preferably at right angles, with respect to the feed direction (G) of the articles (9) fed to the inlet (A).

14. Apparatus according to Claim 13, characterized in that the removal conveyor (30) is assigned jointly to a plurality of conveying devices (1, 1', 1'', 1''') arranged one beside the other.

15. Apparatus according to one of Claims 1 - 3, characterized in that, when the outlet (B_{z}) is located in the centre (2), the windings (W) of the conveying section (3, 4) are offset laterally with respect to one another such that the outlet (B_{z}) is free at the side and that the outlet (B_{z}) is adjoined by a removal conveyor (30) whose conveying direction (F) runs essentially parallel to the feed direction (G) of the articles (9) fed to the inlet (A).

16. Apparatus according to one of Claims 1 - 15, characterized in that the conveying device (1) is mounted in a displaceable frame or framework (24).

17. Apparatus according to Claim 4, characterized in that the conveying sections (3, 4) are arranged alongside a main conveying section (26) which guides the articles (9) past in a preferably rectilinear manner, and the inlet (A) and the outlet (B) of the conveying sections (3, 4) can optionally be linked to the main conveying section (26) in order for articles (9) fed by the main conveying section (26) to be fed to the inlet (A) and for articles (9) appearing at the outlet (B) to be discharged to the main conveying section (26) again.

18. Apparatus according to Claim 4, characterized in that the conveying arrangement (5) can be driven in opposite directions in order for the articles (9) fed to the inlet (A) to be stored in the conveying sections (3, 4) and then to be discharged again at the outlet (B) which coincides with the inlet (A).

19. Apparatus according to one of Claims 1 - 18 for conveying printed products, in particular newspapers, periodicals, parts thereof and supplements therefor, which preferably occur in an imbricated formation (S, S').

## Revendications

1. Dispositif pour transporter des objets (9), en particulier des produits plats, avec un dispositif de transport (1), dont font partie une zone de transport (3 ou 4) présentant des courbes et un agencement de transport (5) pour le transport des objets (9) le long de la zone de transport (3 ou 4), caractérisé en ce que la zone de transport (3 ou 4) s'enroule autour d'un centre (2) à la façon d'une spirale, l'entrée (A) de la zone de transport (3 ou 4) se trouvant en ce centre (2) ou étant déportée vers l'extérieur par rapport à ce centre (2).

2. Dispositif suivant la revendication 1, caractérisé en ce que la zone de transport (3 ou 4) se compose de tronçons sensiblement rectilignes (34) et de tronçons courbes (35) raccordant ceux-ci l'un à l'autre.

3. Dispositif suivant la revendication 1, caractérisé en ce que la zone de transport (3 ou 4) présente une courbure continue.

4. Dispositif suivant l'une quelconque des revendications 1 - 3, caractérisé par une seconde zone de transport (4) concentrique à la première zone de transport (3), également enroulée à la façon d'une spirale, à laquelle est associé un agencement de transport (5) pour le transport des objets (9) dans une direction de circulation (D) opposée à la direction de circulation (C) de la première zone de transport (3) et qui se raccorde au centre (2) à la première zone de transport (3), tant l'entrée (A) que la sortie (B) des deux zones de transport (3, 4) placées l'une a la suite de l'autre étant déportées vers l'extérieur par rapport au centre (2).

5. Dispositif suivant la revendication 4, caractérisé en ce que les spires (W, W') de l'une des zones de transport (3, 4) sont enroulées entre les spires (W',W) de l'autre zone de transport (4, 3).

6. Dispositif suivant l'une quelconque des revendications 1 - 5, caractérisé en ce que l'agencement de transport (5) est formé par un chemin de guidage fixe (7) soutenant en direction du centre (2) le produit transporté (8), formé de préférence par des rouleaux (12) ou des cylindres, et par une courroie de transport sans fin (6), entraînée par un moteur, le produit transporté (8) étant disposé entre le chemin de guidage (7) et la courroie de transport (6).

7. Dispositif suivant l'une quelconque des revendications 1 - 5, caractérisé en ce que l'agencement de transport (5') est formé par un transporteur (15), qui présente des pinces (16) déclenchables, fixées à distance l'une de l'autre à un organe de traction (19) souple entraîné par un moteur, qui saisissent le produit transporté (8).

8. Dispositif suivant l'une quelconque des revendications 1 - 5, caractérisé en ce que l'agencement de transport (5) est formé par un chemin de guidage fixe (7), soutenant en direction du centre (2) le produit transporté (8), formé de préférence par des rouleaux (12') ou des cylindres, et par une bande de transport sans fin (6') en matière élastique comprimable, entraînée par un moteur, le produit transporté (8) étant disposé entre le chemin de guidage (7) et la bande de transport (6').

9. Dispositif suivant l'une quelconque des revendications 4 - 8, caractérisé en ce qu'il est prévu un agencement de transport (5) commun pour les deux zones de transport (3, 4).

10. Dispositif suivant l'une quelconque des revendications 4 - 8, caractérisé en ce qu'un agencement de transport propre (5, 5a) est associé à chaque zone de transport (3, 4).

11. Dispositif suivant l'une quelconque des revendications 4 - 10, caractérisé en ce qu'il est prévu au centre (2), entre les zones de transport (3, 4), une zone de retournement (25) pour le retournement du produit transporté (8) de 180° autour d'un axe parallèle à la direction de transport.

12. Dispositif suivant l'une quelconque des revendications 1 - 11, caractérisé en ce qu'une zone de transport supplémentaire (3a, 4a) est disposée à côté de chaque zone de transport (3, 4), parallèlement à celle-ci.

13. Dispositif suivant l'une quelconque des revendications 1 - 3, caractérisé en ce qu'il est prévu, près de la sortie (B_{z}) se trouvant au centre (2), un transporteur de sortie (30) reprenant les objets (9) qui quittent la zone de transport (3 ou 4), dont la direction de transport (F) est orientée transversalement, de préférence perpendiculairement, à la direction d'arrivée (G) des objets (9) arrivant à l'entrée (A).

14. Dispositif suivant la revendication 13, caractérisé en ce que le transporteur de sortie (30) est associé en commun à plusieurs dispositifs de transport (1, 1', 1'', 1''') disposés l'un a côté de l'autre.

15. Dispositif suivant l'une quelconque des revendications 1 - 3, caractérisé en ce que, près de la sortie (B_{z}) se trouvant au centre (2), les spires (W) de la zone de transport (3, 4) sont déportées latéralement l'une par rapport à l'autre d'une façon telle que la sortie (B_{z}) soit latéralement libre et qu'à la sortie (B_{z}) soit raccordé un transporteur de sortie (30), dont la direction de transport (F) est essentiellement parallèle à la direction d'arrivée (G) des objets (9) arrivant à l'entrée (A).

16. Dispositif suivant l'une quelconque des revendications 1 - 15, caractérisé en ce que le dispositif de transport (1) est supporté dans un cadre ou un châssis mobile (24).

17. Dispositif suivant la revendication 4, caractérisé en ce que les zones de transport (3, 4) sont disposées à côté d'une zone de transport principale (26) transportant les objets (9) de préférence en ligne droite et l'entrée (A) et la sortie (B) des zones de transport (3, 4) peuvent être raccordées au choix à la zone de transport principale (26), pour amener a l'entrée (A) des objets (9) fournis par la zone de transport principale (26) et céder de nouveau à la zone de transport principale (26) des objets (9) apparaissant à la sortie (B).

18. Dispositif suivant la revendication 4, caractérisé en ce que l'agencement de transport (5) peut être entraîné dans des directions opposées, afin de décharger dans les zones de transport (3, 4) les objets (9) arrivant à l'entrée (A) et ensuite de les céder de nouveau à la sortie (B) coïncidant avec l'entrée (A).

19. Dispositif suivant l'une quelconque des revendications 1 - 18, pour transporter des produits imprimés (9), en particulier des journaux, des périodiques, des parties de ceux-ci ou des annexes à ceux-ci, qui se présentent de préférence sous la forme d'une nappe étalée (S, S').
